# EUROPEAN PATENT APPLICATION

(11) **EP 3 406 567 A1**
(43) Date of publication of application: **28.11.2018**
(21) Application number: 17741495.0
(22) Date of filing: 19.01.2017
(51) Int. Cl.: C01G 49/00, G03G 9/083, H01F 1/11

(54) **MAGNETIC SUBSTANCE, MAGNETIC TONER, AND MAGNETIC POWDER**

(30) Priority: 20.01.2016 JP 2016009190
(71) Applicant: The University Of Tokyo, Tokyo 113-8654 (JP); Dowa Electronics Materials Co., Ltd., Chiyoda-ku Tokyo 101-0021 (JP)
(72) Inventor: OHKOSHI Shin-ichi, Tokyo 113-8654 (JP); TOKORO Hiroko, Tokyo 113-8654 (JP); MASADA Kenji, Tokyo 101-0021 (JP); UEYAMA Toshihiko, Tokyo 101-0021 (JP)
(74) Representative: Müller-Boré & Partner Patentanwälte PartG mbB
(86) International application number: PCT/JP2017/001782
(87) International publication number: WO 2017/126618

(57) **Abstract**

There is provided a magnetic substance containing substituted ε-iron oxide particles applicable as a magnetic toner of one-component development system, and a technique related thereto, which is the magnetic substance containing substituted ε-iron oxide particles in which a part of ε-iron oxide is substituted with a metal element other than iron, and satisfying at least one of the following conditions: (Condition 1) A molar extinction coefficient of a magnetic substance dispersion liquid at a wavelength of 450 nm is less than 770 dm³ mol⁻¹ cm⁻¹. (Condition 2) A molar extinction coefficient of the magnetic substance dispersion liquid at a wavelength of 500 nm is less than 430 dm³ mol⁻¹ cm⁻¹.

## Description

### Technical Field

The present invention relates to a magnetic substance using substituted ε-type iron oxide magnetic powder, a magnetic toner and a magnetic powder.

### Description of Related Art

As a development system employed in an electrophotographic image forming apparatus such as a copying machine or a printer, known-methods include two-component development system in which toner and a carrier or iron powder is used, and one-component development system in which a magnetic toner containing magnetic powder inside of the toner is used without using the carrier. The one-component development system has a merit that it is compact and low in cost by not using the carrier.

While there is such a situation, inventors of the present invention develop ε-iron oxide (ε-Fe₂O₃) which is expected to be applied to magnetic recording media of high recording density or other magnetic applications, or applied to radio wave absorption application (for example Non-Patent Document 1).

### Prior Art Document

### Non-Patent Document 1

[Non-Patent Document 1] S. Ohkoshi, A. Namai, K. Imoto, M. Yoshikiyo, W. Tarora, K. Nakagawa, M. Komine, Y. Miyamoto, T. Nasu, S. Oka and H. Tokoro, Scientific Reports, 5, 14414 (2015).

### Summary of the Invention

### Problem to be solved by the Invention

The ε-iron oxide disclosed in the above Non-Patent Document 1 exhibits a huge coercive force (Hc). Generally, a magnetic toner having high magnetic properties is required as a magnetic toner. Particularly, if a material having a high coercive force is used, a fog phenomenon can be suppressed, and therefore by using such ε-iron oxide, it can be expected that a magnetic toner excellent in development properties can be provided. However, magnetic powder has a peculiar color, and particularly when the magnetic powder is contained as a toner of the one-component development system, there is a problem that the magnetic substance is likely to be colored in black, brownish brown, reddish brown, etc. (hereinafter collectively referred to as "brown or the like"), and it is difficult to obtain clear color photographs. Namely, in the one-component developing system, it is necessary to use a magnetic substance which is difficult to be colored in brown when used as a toner.

However, in the ε-iron oxide described in the abovementioned document, a slight brown color is still observed, and therefore in order to use the magnetic substance as a magnetic toner of the one-component development system, it is preferable to make the color of the magnetic substance thinner.

In the abovementioned circumstance, the present invention is provided, and an object of the present invention is to provide a magnetic substance containing substituted ε-iron oxide particles applicable as a magnetic toner of one-component development system, and a technique related thereto.

### Means for solving the Problem

In order to solve the abovementioned problem, intensive study has been performed by the inventors of the present invention. As a result, knowledge is obtained, such that a substance having a predetermined absorbance (molar extinction coefficient) at a predetermined wavelength can be used as the magnetic toner. Then, it is found that by using a magnetic substance substituted with a part (iron element) of ε-iron oxide which will be described later in this specification, it becomes possible for the first time to suppress the coloration to such an extent that it can be sufficiently applied to the one-component development system.

Namely, in order to solve the abovementioned problem, a first invention is a magnetic substance containing substituted ε-iron oxide particles in which a part of ε-iron oxide is substituted with a metal element other than iron, and satisfying at least one of the following conditions:
(Condition 1) A molar extinction coefficient of a magnetic substance dispersion liquid at a wavelength of 450 nm is less than 770 dm³ mol⁻¹ cm⁻¹.
(Condition 2) A molar extinction coefficient of the magnetic substance dispersion liquid at a wavelength of 500 nm is less than 430 dm³ mol⁻¹ cm⁻¹.

A second invention is the magnetic substance of the first invention, wherein the molar extinction coefficient of the dispersion liquid at a wavelength of 450 nm is 400 dm³ mol⁻¹ cm⁻¹ or less.

A third invention is the magnetic substance of the first or second invention, wherein the molar extinction coefficient of the dispersion liquid at a wavelength of 500 nm is 250 dm³ mol⁻¹ cm⁻¹ or less.

A fourth invention is the magnetic substance of any one of the first to third inventions, wherein the metal element is at least one of aluminum, gallium and indium.

A fifth invention is the magnetic substance of any one of the first to fourth inventions, which is provided for magnetic toner application of one-component development system.

A sixth invention is a magnetic toner, containing the substituted ε-iron oxide particles in the magnetic substance of any one of the first to fifth inventions, and a binder resin.

A seventh invention is a magnetic powder composed of the substituted ε-iron oxide particles in the magnetic substance of any one of the first to fifth inventions.

### Advantage of the Invention

According to the present invention, it is possible to provide a magnetic substance containing substituted ε-iron oxide particles applicable as a magnetic toner of a one-component development system and a technique related thereto.

### Brief Description of the Drawings

FIG. 1 is a diagram showing ultraviolet-visible absorption spectra obtained in Examples 1-1 to 1-3 and a Comparative example.
FIG. 2 is a diagram showing ultraviolet-visible absorption spectra obtained in Examples 2-1 to 2-3 and a Comparative example.

### Detailed Description of the Invention

Embodiments of the present invention will be described in an order of (1) Substituted ε-iron oxide particles, (2) Mixed solvent and vehicle, and (3) Colloid of substituted ε-iron oxide particles.

### (1) Substituted ε-iron oxide particles

The substituted ε-iron oxide particles used in the present invention are not particularly limited as long as they are particles in which a part (iron element) of ε-iron oxide is substituted with a metal element other than iron. However, as indicated by the items of the embodiments described later, it is preferable that the metal element used for substitution is at least one of aluminum (Al), gallium (Ga) and indium (In). In the case of ε-MₓFe₂₋ₓO₃ (M is any one of aluminum (Al), gallium (Ga) and indium (In)), a substitution amount is in a range of 0 < x < 2, preferably 0.25 < x < 2, and more preferably 0.5 < x < 2. It is preferable to set the substitution amount in this range, because transparency can be increased.

### (2) Mixed solvent and vehicle

In the present invention, a mixed solvent and a vehicle will be described.

The mixed solvent used in the present invention is a mixed solution of toluene and methyl ethyl ketone as shown in examples described later.

Then, as a vehicle used in the present invention, as also shown in examples described later, a vehicle in which urethane resin and vinyl chloride resin are dissolved in a mixed solution of acetylacetone, n-butyl stearate, and cyclohexane, can be used.

In this embodiment, the substituted ε-iron oxide particles are dispersed in the mixed solution of the mixed solvent and the vehicle to form a colloid (dispersion liquid, dispersion body).

### (3) Colloid of substituted ε-iron oxide particles

In the present invention, as a method for preparing a colloid of substituted ε-iron oxide particles, substituted ε-iron oxide particles are dispersed in a predetermined solvent using a shaking type stirring device to obtain a colloid. As an example, the substituted ε-iron oxide particles, the mixed solvent, the vehicle, and a mixing ball (for example, zirconia ball of 0.3 mmϕ) are charged into a container such as a centrifuge tube. Then, by shaking the container at a shaking number of 100 to 3000 times / min, with an amplitude of 1 to 10 mm, and for 0.5 to 10 hours, the abovementioned colloid is obtained.

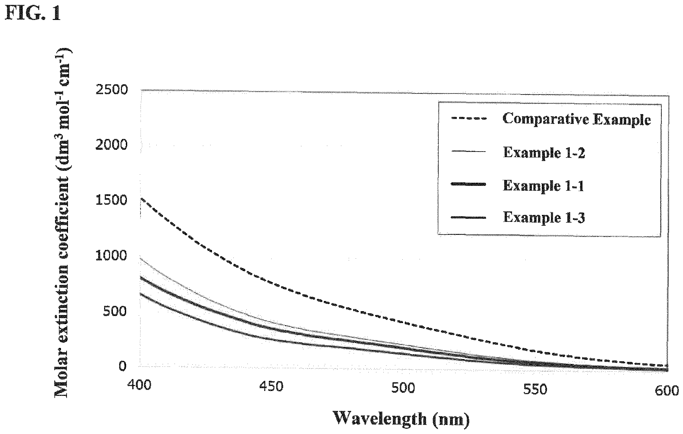

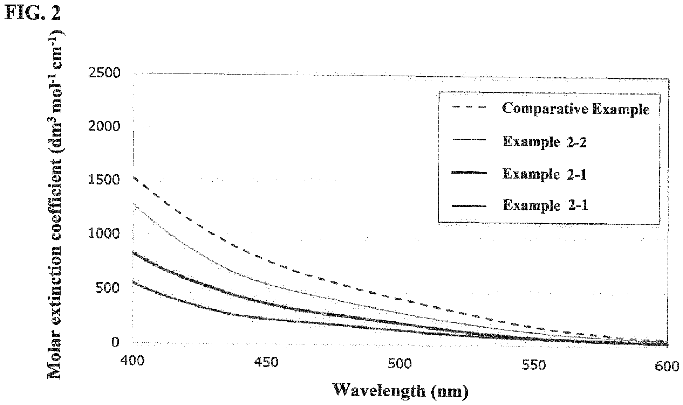

Further, in the items of the embodiments described later, the ultraviolet-visible absorption spectrum of the colloid was also measured (FIGS. 1 and 2). As a result, it was confirmed that the molar extinction coefficient indicating the turbidity of the liquid was greatly reduced as compared with a Comparative example described later.

More specifically, it can be said that transparency is higher when the molar extinction coefficient is as low as possible in the ultraviolet-visible absorption spectrum, and therefore it is preferable that the molar extinction coefficient shows a value as low as possible. Specifically, it is preferable that the molar extinction coefficient of the magnetic substance dispersion liquid containing substituted ε-iron oxide particles at a wavelength of 450 nm is less than 770 dm³ mol⁻¹ cm⁻¹, and more preferably 400 dm³ mol⁻¹ cm⁻¹ or less, and still more preferably 360 dm³ mol⁻¹ cm⁻¹ or less.

Further similarly, it is preferable that the molar extinction coefficient of the magnetic substance dispersion liquid containing substituted ε-iron oxide particles at a wavelength of 500 nm is less than 430 dm³ mol⁻¹ cm⁻¹, and more preferably 250 dm³ mol⁻¹ cm⁻¹ or less, and even more preferably 210 dm³ mol⁻¹ cm⁻¹ or less.

Generally, it is known that when the measurement wavelength is shifted to the low wavelength (short wavelength) side, the increase of absorbance rapidly occurs, and in the case of particles having lower absorbance at the lower wavelength side, the measurement sample indicates that the turbidity is lower, that is, the transparency of the liquid is higher. Accordingly, at 400 nm which is the lower wavelength side, the absorbance is preferably less than 1500 dm³ mol⁻¹ cm⁻¹, preferably less than 1250 dm³ mol⁻¹ cm⁻¹, and more preferably less than 1000 dm³ mol⁻¹ cm⁻¹. By using the particles having such properties, a toner in which coloration is suppressed over a so-called visible light range (wavelength: 380 to 780 nm) can be obtained, which is preferable.

Although the present inventors are intensively studying on a mechanism that brings out these effects, mainly, as shown in this embodiment or the examples described later, by element substitution for ε-iron oxide, an action of shifting the absorption wavelength of light to the ultraviolet region is generated. As a result, it is considered that the coloration is greatly reduced.

A magnetic toner can be obtained by mixing the substituted ε-iron oxide particles and a binder resin. As a specific method for obtaining the magnetic toner, known ones may be adopted. For example, the kind of the binder resin may be a polystyrene resin, a styrene-acrylic resin, a polyester resin, an epoxy resin, a polyamide resin, or the like.

As described above, the magnetic substance with reduced coloration is realized, with the one-component development system as a cue. However, of course, application of the magnetic substance to other applications is not hindered.

### Examples

The present invention will be more specifically described hereafter, with reference to examples.

### [Example 1-1]

### (1) Preparation of Al-substituted ε-iron oxide particles

Al substituted ε-Fe₂O₃ crystal particles (ε-Al_{0.66}Fe_{1.34}O₃) were prepared as follows.

3524 mL of pure water was placed in a 5 L beaker, and 346.7 g of iron (III) nitrate nonahydrate and 185.4 g of aluminum (III) nitrate nonahydrate were added and dissolved by stirring. While stirring the solution, 363.6 mL of a 25% aqueous ammonia solution was added and the mixture was stirred for 30 minutes. While stirring was continued, 395.4 mL of tetraethoxysilane (TEOS) was added dropwise to the mixed solution, and the mixture was stirred for 20 hours.

The obtained mixed solution was filtered, the precipitate was washed with pure water, dried, and pulverized in a mortar to obtain pulverized powder. The obtained pulverized powder was subjected to heat treatment in a furnace at 1100 °C for 4 hours in an air atmosphere to obtain a heat treated powder.

The obtained heat-treated powder was disintegrated in a mortar and thereafter added to a 0.8 mol / L sodium hydroxide (NaOH) aqueous solution. Then, silicon oxide was removed from the heat-treated powder by stirring at a liquid temperature of 65 °C for 24 hours. Next, the heat-treated powder from which silicon oxide was removed was centrifuged to precipitate, and the supernatant liquid was discarded, and thereafter pure water was added, washed, and centrifuged again.

The washed precipitate was filtered and recovered, and thereafter dried to obtain Al-substituted ε-iron oxide particles.

Magnetic properties of the obtained Al substituted ε-iron oxide particle sample were measured, and specifically they were measured at maximum applied magnetic field of 50 kOe, and at temperature 300 K, using SQUID (superconducting quantum interferometer) of MPMS 7 manufactured by Quantum Design Corporation.

As a result, it was confirmed that the saturation magnetization of the Al substituted ε-iron oxide particle sample was 17.3 emu / g, and the obtained Al substituted ε-iron oxide particle sample was a magnetic substance.

Composition analysis was performed for the obtained Al substituted ε-iron oxide particles, and it was found that a nanomagnetic particle powder sample having a composition of ε-Al_{0.66}Fe_{1.34}O₃ was obtained. When crystal analysis by Rietveld analysis was performed, particles satisfying a = 5.039 Å, b = 8.662 Å, c = 9.343 Å, crystal volume = 424.2 Å³ were obtained. At this time, calculation was performed and it was found that 27% of A site, 8% of B site, 31% of C site, and 67% of D site in the crystal structure of ε-Fe₂O₃ were substituted with aluminum.

### (2) Preparation of colloid of Al substituted ε-iron oxide particles

10 mg of ε-Al_{0.66}Fe_{1.34}O₃ nanoparticle powder, 1.4 ml of a mixed solvent (toluene: methyl ethyl ketone = 1: 1), 0.5 mL of vehicle (34.9 g of a urethane resin (UR-8200 manufactured by Toyobo Co., Ltd.) and 15.8 g of a vinyl chloride resin (MR-555 manufactured by Zeon Corporation) were dissolved in a mixed solvent of 0.25 g of acetylacetone, 0.25 g of n-butyl stearate, and 97.9 mL of cyclohexane), and 20 g of zirconia ball of 0.3 mmφ, were charged into a 50 mL centrifuge tube.

Then, the centrifuge tube was set on a shaker, and the Al substituted ε-iron oxide particles were dispersed in the mixed solvent by shaking and stirring 2000 times / min, with an amplitude of 3 mm, and for 4 hours, to obtain an Al substituted ε-iron oxide particle dispersion liquid (colloid).

Finally, the concentration was adjusted by adding a mixed solvent (toluene: methyl ethyl ketone = 1: 1), and spectroscopic measurement was performed to obtain ultraviolet-visible absorption spectrum of ε-iron oxide particle dispersion liquid (colloid) of 0.02 mol / L. In the spectroscopic measurement, the colloid was loaded into a quartz cell and measurement was performed using JASCO V-670 manufactured by JASCO Corporation.

### [Example 1-2]

Example 1-1 was repeated except that addition amount of aluminum and iron was adjusted to obtain ε-Al_{0.48}Fe_{1.52}O₃ instead of ε-Al_{0.66}Fe_{1.34}O₃ as Al substituted ε-iron oxide particles. A spectral diagram obtained by subjecting the obtained colloidal solution to spectroscopic measurement is also shown in FIG. 1.

### [Example 1-3]

Example 1-1 was repeated except that addition amount of aluminum and iron was adjusted to obtain ε-Al_{0.75}Fe_{1.25}O₃ instead of ε-Al_{0.66}Fe_{1.34}O₃ as Al substituted ε-iron oxide particles. A spectral diagram obtained by subjecting the obtained colloidal solution to spectroscopic measurement is also shown in FIG. 1.

As shown in FIG. 1, it was confirmed that the molar extinction coefficient became smaller as the amount of aluminum substitution was increased.

### [Example 2-1]

### (1) Preparation of Ga substituted ε-iron oxide particles

Ga substituted ε-Fe₂O₃ crystal particles (ε-Ga_{0.67}Fe_{1.33}O₃) were prepared as follows.

1988 mL of pure water was placed in a 5 L beaker, and 174.5 g of iron (III) nitrate nonahydrate and 102.6 g of gallium nitrate (III) octahydrate were added and dissolved by stirring. While stirring the solution, 199.1 mL of a 25% aqueous ammonia solution was added and the mixture was stirred for 30 minutes. While stirring was continued, 225.5 mL of tetraethoxysilane (TEOS) was added dropwise to the mixed solution, and the mixture was stirred for 20 hours.

The obtained mixed solution was filtered, the precipitate was washed with pure water, dried, and pulverized in a mortar to obtain pulverized powder. The obtained pulverized powder was subjected to heat treatment in a furnace at 1150 °C for 6 hours in an air atmosphere to obtain a heat treated powder.

The obtained heat-treated powder was disintegrated in a mortar and thereafter added to a 0.4 mol / L sodium hydroxide (NaOH) aqueous solution. Then, silicon oxide was removed from the heat-treated powder by stirring at a liquid temperature of 65 °C for 24 hours. Next, the heat-treated powder from which silicon oxide was removed was centrifuged to precipitate, and the supernatant liquid was discarded, and thereafter pure water was added, washed, and centrifuged again.

The washed precipitate was filtered and recovered, and thereafter dried to obtain Ga substituted ε-iron oxide particles.

Magnetic properties of the obtained Ga substituted ε-iron oxide particle sample were measured, and specifically they were measured at maximum applied magnetic field of 90 kOe, and at temperature of 300 K, using SQUID (superconducting quantum interferometer) of MPMS 7 manufactured by Quantum Design Corporation.

As a result, it was confirmed that the saturation magnetization of the Ga substituted ε-iron oxide particle sample was 17.0 emu / g, and the obtained Ga substituted ε-iron oxide particle sample was a magnetic substance.

Further, composition analysis was performed for the obtained Ga substituted ε-iron oxide particles, and it was found that a nanomagnetic particle powder sample having a composition of ε-Ga_{0.67}Fe_{1.33}O₃ was obtained. In addition, when crystal analysis by Rietveld analysis was performed, particles satisfying a = 5.085 Å, b = 8.755 Å, c = 9.410 Å, crystal volume = 418.4 Å³ were obtained. At this time, calculation was performed and it was found that Fe at the A site was not substituted, and 9% of B site, 28% of C site, and 98% of D site in the crystal structure of ε-Fe₂O₃ were substituted with gallium.

### (2) Preparation of colloid of Ga substituted ε-iron oxide particles

A colloid of Ga substituted ε-iron oxide particles was prepared in the same manner as in Example 1 and subjected to spectroscopic measurement to obtain an ultraviolet-visible absorption spectrum.

### [Example 2-2]

Example 2-1 was repeated except that addition amount of gallium and iron was adjusted to obtain ε-Ga_{0.29}Fe_{1.71}O₃ instead of ε-Ga_{0.67}Fe_{1.33}O₃ as Ga substituted ε-iron oxide particles. A spectral diagram obtained by subjecting the obtained colloidal solution to spectroscopic measurement is also shown in FIG. 2.

### [Example 2-3]

Example 2-1 was repeated except that addition amount of gallium and iron was adjusted to obtain ε-Ga_{0.94}Fe_{1.06}O₃ instead of ε-Ga_{0.67}Fe_{1.33}O₃ as Ga substituted ε-iron oxide particles. A spectral diagram obtained by subjecting the obtained colloidal solution to spectroscopic measurement is also shown in FIG. 2.

As shown in FIG. 2, it was confirmed that the molar extinction coefficient became smaller as the amount of gallium substitution was increased.

### [Comparative example]

In this Comparative example, the method described in Japanese Patent Application Laid-open No. 2014-224027 relating to the method for producing ε-iron oxide particles (unsubstituted) disclosed by the present inventors was adopted.

### (1) Preparation of ε-iron oxide particles (unsubstituted)

420 mL of pure water and 8.0 g of an oxide hydroxide (III) (β-FeO (OH)) nanoparticle sol having an average particle size of 6 nm were placed in a 1 L Erlenmeyer flask, and the mixture was stirred until it became a homogeneous solution. 19.2 mL of a 25% ammonia (NH₃) aqueous solution was added to the above solution dropwise at 1 to 2 drops / sec, followed by stirring in an oil bath (or a water bath) at 50 °C for 30 minutes. Further, 24 mL of tetraethoxysilane (Si(OC₂H₅)₄) was added dropwise to this solution at 2 to 3 drops / sec. After stirring at 50 °C for 20 hours, the mixture was allowed to cool to room temperature and 20 g of ammonium sulfate ((NH₄)₂SO₄) was added to obtain a precipitate.

The precipitate was separated by centrifugation, washed with pure water, transferred to a petri dish, dried at 60 °C overnight, and thereafter pulverized in an agate mortar. Then, heat treatment was performed at 1020 °C for 4 hours in a furnace in the atmosphere. Thereafter, etching treatment was performed with a 5 M aqueous solution of sodium hydroxide (NaOH) for 24 hours to obtain ε-Fe₂O₃ particles from which silica was removed.

### (2) Preparation of colloid of ε-iron oxide particles (unsubstituted)

A colloid of ε-iron oxide particles (unsubstituted) was prepared in the same manner as in Example 1 and subjected to spectroscopic measurement to obtain an ultraviolet-visible absorption spectrum.

### [Verification]

Each Example and Comparative example was verified below.

### (Result of ultraviolet and visible absorption spectrum)

The ultraviolet-visible absorption spectra (vertical axis: molar absorption coefficient, horizontal axis: wavelength) obtained in Examples 1-1 to 1-3 and Comparative example are shown in FIG. 1, and the UV-visible absorption spectra (vertical axis: molar extinction coefficient, horizontal axis: wavelength) obtained in Examples 2-1 to 2-3 and Comparative example are shown in FIG. 2. As shown in FIG. 1 and FIG. 2, when the colloid of substituted ε-iron oxide particles is used, absorption of light is considerably suppressed as shown in each example, compared with the Comparative example (ε-Fe₂O₃), and therefore the coloration was extremely suppressed and it was very close to transparent.

The following Table 1 summarizes the measurement results of molar extinction coefficients of Examples and Comparative example.

**[Table 1]**

| | ε-MₓFe_{(2-X)}O₃ | | **Molar extinction coefficient (dm³ mol⁻¹ cm⁻¹)** | | |
|---|---|---|---|---|---|
| | **M:Al, x-value** | **M:Ca,x-value** | 500nm | 450nm | 400nm |
| **Example 1-2** | 0.48 | - | 224 | 417 | 984 |
| **Example 1-1** | 0.66 | - | 193 | 359 | 813 |
| **Example 1-3** | 0.75 | - | 142 | 259 | 665 |
| **Example 2-2** | - | 0.29 | 300 | 556 | 1282 |
| **Example 2-1** | - | 0.67 | 204 | 377 | 830 |
| **Example 2-3** | - | 0.94 | 138 | 236 | 558 |
| **Comparative example** | - | - | 427 | 774 | 1531 |

As an Example of Table 1, compared with the molar extinction coefficient of 774 dm³ mol⁻¹ cm⁻¹ of the dispersion liquid of the Comparative example (ε-Fe₂O₃) at a wavelength of 450 nm, the molar extinction coefficient was 359 dm³ mol⁻¹ cm⁻¹ in Example 1-1 (ε-Al_{0.66}Fe_{1.34}O₃), and 377 dm³ mol⁻¹ cm⁻¹ in Example 2-1 (ε-Ga_{0.67}Fe_{1.33}O₃) at the above wavelength.

In view of the above contents, it is preferable that the molar extinction coefficient of the dispersion liquid at a wavelength of 450 nm is less than 774 dm³ mol⁻¹ cm⁻¹, further preferably 770 dm³ mol⁻¹ cm⁻¹ or less, and more preferably 400 dm³ mol⁻¹ cm⁻¹ or less, and still more preferably 360 dm³ mol⁻¹ cm⁻¹ or less.

Further, compared with the molar extinction coefficient of 427 dm³ mol⁻¹ cm⁻¹ of the Comparative example (ε-Fe₂O₃) at a wavelength of 500 nm, the molar extinction coefficient was 193 dm³ mol⁻¹ cm⁻¹ in Example 1-1 (ε-Al_{0.66}Fe_{1.34}O₃), and 204 dm³ mol⁻¹ cm⁻¹ in Example 2-1 (ε-Ga_{0.67}Fe_{1.33}O₃) at the above wavelength.

In view of the above contents, it is preferable that the molar extinction coefficient of the dispersion liquid at a wavelength of 500 nm is preferably 430 dm³ mol⁻¹ cm⁻¹ or less (preferably less than), further preferably less than 427 dm³ mol⁻¹ cm⁻¹, and more preferably 250 dm³ mol to 1 cm⁻¹ or less, and sill more preferably 210 dm³ mol to 1 cm⁻¹ or less.

Further, compared with the molar extinction coefficient of 1531 dm³ mol⁻¹ cm⁻¹ of the Comparative example (ε-Fe₂O₃) at a wavelength of 400 nm, the molar extinction coefficient was 813 dm³ mol⁻¹ cm⁻¹ in Example 1-1 (ε-Al_{0.66}Fe_{1.34}O₃), and 830 dm³ mol⁻¹ cm⁻¹ in Example 2 - 1 (ε-Ga_{0.67}Fe_{1.33}O₃) at the above wavelength.

In view of the above contents, the molar extinction coefficient of the dispersion liquid at a wavelength of 400 nm is 1500 dm³ mol⁻¹ cm⁻¹ or less (preferably less than), more preferably 1250 dm³ mol⁻¹ cm⁻¹ or less (preferably less than), and still more preferably 1000 dm³ mol⁻¹ cm⁻¹ or less (preferably less than).

### [Conclusion]

As a result, in each example, it was found that brown coloration was suppressed as compared with the comparative example, and as a result thereof, each example could be applied as a magnetic toner of a one-component developing system.

## Claims

1. A magnetic substance containing substituted ε-iron oxide particles in which a part of iron oxide is substituted with a metal element other than iron, and satisfying at least one of the following conditions:
(Condition 1) A molar extinction coefficient of a magnetic substance dispersion liquid at a wavelength of 450 nm is less than 770 dm³ mol⁻¹ cm⁻¹.
(Condition 2) A molar extinction coefficient of the magnetic substance dispersion liquid at a wavelength of 500 nm is less than 430 dm³ mol⁻¹ cm⁻¹.

2. The magnetic substance according to claim 1, wherein the molar extinction coefficient of the dispersion liquid at a wavelength of 450 nm is 400 dm³ mol⁻¹ cm⁻¹ or less.

3. The magnetic substance according to claim 1 or 2, wherein the molar extinction coefficient of the dispersion liquid at a wavelength of 500 nm is 250 dm³ mol⁻¹ cm⁻¹ or less.

4. The magnetic substance according to any one of claims 1 to 3, wherein the metal element is at least one of aluminum, gallium and indium.

5. The magnetic substance according to any one of claims 1 to 4, which is provided for magnetic toner application of one-component development system.

6. A magnetic toner, containing the substituted ε-iron oxide particles in the magnetic substance of any one of claims 1 to 5, and a binder resin.

7. A magnetic powder composed of the substituted ε-iron oxide particles in the magnetic substance of any one of claims 1 to 5
